# EUROPÄISCHE PATENTSCHRIFT

(11) **EP 1 935 611 B1**
(45) Veröffentlichungstag und Bekanntmachung des Hinweises auf die Patenterteilung: **01.04.2009**
(21) Anmeldenummer: 06026662.4
(22) Anmeldetag: 22.12.2006
(51) Int. Cl.: B29C 47/64

(54) **Extruderspitze für hochviskose Stoffe**
Extruder tip for high viscous material
Tête d'extrudeuse pour matière de viscosité élevée

(43) Veröffentlichungstag der Anmeldung: 25.06.2008
(73) Patentinhaber: Coperion GmbH, 70469 Stuttgart (DE)
(72) Erfinder: Hölzel, Maria, 71254 Ditzingen (DE); Kyrion, Dirk, 75447 Sternenfels (DE)
(74) Vertreter: Rau, Manfred

(56) Entgegenhaltungen:
- FR-A- 1 206 465
- FR-A1- 2 322 719
- JP-A- 54 040 864
- JP-A- 55 057 444
- JP-A- 55 159 954
- JP-A- 57 070 628
- SU-A1- 925 654
- US-A- 2 291 212
- US-A- 2 488 129
- US-A- 3 018 516
- US-A- 3 901 486
- US-A- 4 057 379

## Beschreibung

Die Erfindung betrifft einen Extruder nach dem Oberbegriff des Anspruches 1.

Bei einem derartigen aus der EP 1 037 703 B1 bekannten Extruder ist am stromabwärtigen Ende der Schnecke ein in Richtung der Achse federnd gelagertes Abstreiforgan angebracht, das an der der Bohrung zugewandten Innenseite der Düsenplatte anliegt und zu förderndes Material abstreift. Diese Ausgestaltung soll dazu dienen, wirkstoffhaltige Polymergranulate auszutragen, wobei es sich bei den Wirkstoffen um pharmazeutische Mittel, Pflanzenbehandlungsmittel, Futtermittelzusatzstoffe und Nahrungsmittelzusätze handeln kann.

Aus der US 3,901,486 A ist ein Extruder bekannt, der zweigängig ausgebildet ist. An dem - bezogen auf die Förderrichtung - stromabwärtigen Ende ist eine Düsenplatte vorgesehen, die eine Vielzahl von Düsen-Löchern aufweist. Die Schnecken-Stege sind im Bereich vor der Düsenplatte mit Durchbrechungen versehen. Die Schnecken-Stege weisen bis zum stromabwärtigen Ende der Schnecke einen dem Durchmesser der Gehäuse-Bohrung entsprechenden Außendurchmesser auf. An der am stromabwärtigen Ende der Schnecke ausgebildeten Stirnseite befinden sich eine größere Zahl von als Extrusions-Nuten bezeichneten Ausnehmungen, die in Richtung auf die Achse der Schnecke hin gerichtet sind. Der Zweck liegt darin, das von der Schnecke durch die Schnecken-Stege geförderte Material radial nach innen zu fördern, so dass es im Wesentlichen über den vollen Querschnitt der Schnecke durch die Düsenplatte hindurch gedrückt wird. Die Stirnseite der Schnecke liegt an der Düsenplatte an, um das durch die Düsenplatte zu pressende Material von der Düsenplatte abzukratzen bzw. durch die Düsenplatte zu drücken.

Aus der JP 57070628 A ist ein Extruder bekannt, dessen Schnecken eingängig ausgebildet sind. An ihren - bezogen auf die Förderrichtung - stromabwärtigen Enden sind die Schnecken mit Schneckenköpfen bekannt, die einen elliptischen Außenquerschnitt aufweisen und konkav durchgebogen sind. Vor diesen Schneckenköpfen befindet sich eine Düsenplatte.

Aus der US 2,291,212 A ist ein Extruder bekannt, der an seinem stromabwärtigen Ende ein Sieb aufweist. Am stromabwärtigen Ende sind an der zweigängig ausgebildeten Schnecke Flügel angebracht, um das zu behandelnde Material in Richtung zum Sieb zu fördern.

Aus der US 3,018,516 A ist ein Extruder bekannt, bei dem am stromabwärtigen Ende der Schnecke ein Schaber angebracht ist, der mit einer Düsenplatte zusammenwirkt.

Aus der US 3,976,799 A ist eine Schneckenmaschine mit einem federnd an einer Düsenplatte anliegenden Abstreifer bekannt. Diese Schneckenmaschine dient zum Extrudieren von Nahrungsmitteln und dergleichen.

Aus der US 2,583,600 A ist eine Schneckenmaschine mit einer Düsenplatte bekannt, die mittels eines axial feststehenden Abstreifers abgestreift wird. Diese Schneckenmaschine dient ebenfalls zur Behandlung von Nahrungsmitteln.

Aus der CH 615 384 A5 ist eine Schneckenmaschine bekannt, die eine Düsenplatte aufweist, an deren Innenseite Messer anliegen, die durch den Materialdruck gegen die Düsenplatte gedrückt werden. Diese angedrückten Messer sollen in den einzelnen Materialsträngen, die in jedem Düsen-Loch erzeugt werden, Sollbruchstellen erzeugen, so dass der einzelne Materialstrang nach dem Verlassen der Düsenplatte abbricht.

Zur Extrusion von Materialien, die erst unter erheblicher Scherung fließfähig sind, sind diese Ausgestaltungen nicht geeignet. Unter solchen Materialien versteht man insbesondere Binghamsche Medien, bei denen erst nach Überschreiten der Fließgrenze, d. h. nach Überschreiten einer bestimmten Schubspannung, das Material zu fließen beginnt. Beispiele hierfür sind plastische keramische Massen, kolloide Dispersionen, Aufschlemmungen von Glasperlen etc.

Der Erfindung liegt die Aufgabe zugrunde, einen Extruder so auszugestalten, dass er zur Extrusion von schwer fließfähigen Materialien durch eine Düsenplatte geeignet ist.

Diese Aufgabe wird erfindungsgemäß durch die Merkmale im Kennzeichnungsteil des Anspruches 1 gelöst. Durch die Anbringung des Scherwerkzeuges vor der Düsenplatte wird erreicht, dass unmittelbar vor der Düsenplatte das zu extrudierende Material noch einmal einer sehr hohen Scherung unterworfen und dadurch fließfähig wird. Dies reicht aus, um es durch die Düsenplatte zu extrudieren. Wenn es hinter der Düsenplatte wieder nicht mehr fließfähig ist, so spielt dies keine Rolle. Es ist sichergestellt, dass der Materialstrom von der Schneckenspitze zu dem Scherwerkzeug einer optimalen Scherung unterworfen wird. Außerdem ist sichergestellt, dass der Materialstrom von der Schneckenspitze störungsfrei bis zum Scherspalt strömen kann.

Vorteilhafte weiterbildungen der Erfindung sind Gegenstand der abhängigen Ansprüche.

Durch die Maßnahmen nach Anspruch 2 wird zusätzlich erreicht, dass der Querschnittsbereich der Bohrung, in dem eine totraumfreie, also aktive Förderung erfolgt, sehr groß wird. Dieser Raum ist nicht auf den Bereich zwischen dem Schnecken-Kern und dem Außenumfang der Schneckenstege bzw. der Innenwand der Bohrung beschränkt, sondern erstreckt sich noch vom Schnecken-Kern radial nach innen. Durch die Weiterbildung nach Anspruch 3 wird der Schereffekt besonders optimiert.

Ausführungsbeispiele der Erfindung sind in der Zeichnung dargestellt und werden im folgenden näher beschrieben.

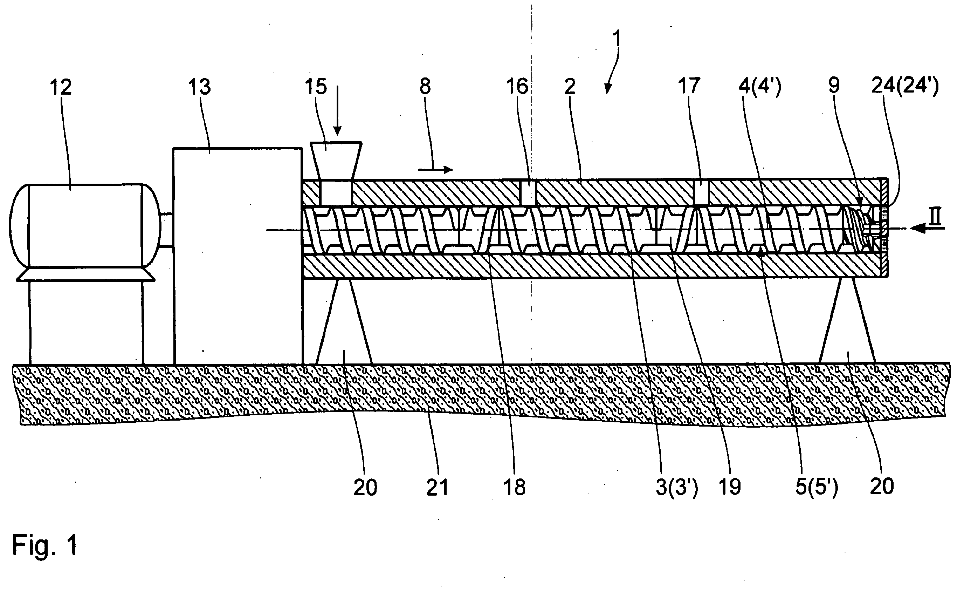

Es zeigen
- Fig. 1: einen Extruder in einer schematischen Längsschnittdarstellung,
- Fig. 2: eine Stirnansicht des Extruders entsprechend dem Sichtpfeil II in Fig. 1,
- Fig. 3: eine Stirnansicht des Extruders entsprechend dem Sichtpfeil II in Fig. 1 bei abgenommener Düsenplatte,
- Fig. 4: einen Teil-Längsschnitt durch den Extruder entsprechend der Schnittlinie IV-IV in Fig. 3,
- Fig. 5: eine Stirnansicht entsprechend Fig. 3 für eine abgewandelte Ausführungsform und

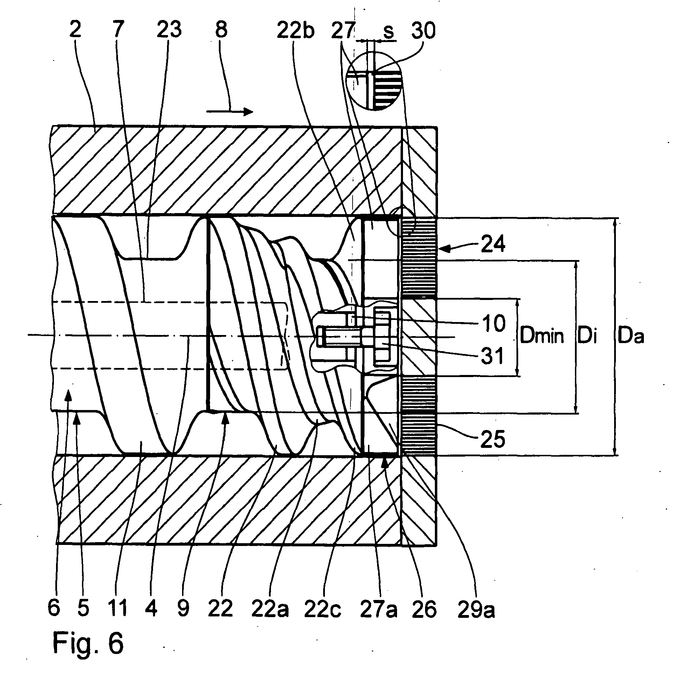

- Fig. 6: eine Schnittdarstellung entsprechend Fig. 4 für die abgewandelte Ausführungsform, und zwar entsprechend der Schnittlinie VI-VI in Fig. 5.

Ein in seinem Grundaufbau in üblicher Weise ausgestalteter Extruder 1 weist ein Gehäuse 2 auf, in dem zwei 8-förmig ineinandergreifende Bohrungen 3, 3' mit zueinander parallelen Achsen 4, 4' ausgebildet sind. In den Bohrungen 3, 3' sind Schnecken 5,5' angeordnet, die aus einzelnen Schnecken-Elementen 6, 6' und gegebenenfalls nicht dargestellten Knetelementen und dergleichen aufgebaut sind. Die Schnecken-Elemente 6, 6' sind auf nur angedeuteten Zahn-Wellen 7 drehfest angeordnet. Das jeweils in Förderrichtung 8 letzte Schnecken-Element 6, 6' ist eine sogenannte Schnecken-Spitze 9, 9'. Alle Schnecken-Elemente 6, 6' einschließlich der Schnecken-Spitze 9, 9' sind mittels einer Spann-Schraube 10, 10' auf der jeweiligen Zahn-Welle 7 in Richtung der jeweiligen Achse 4, 4' verspannt.

Die Schnecken 5, 5' sind dichtkämmend ausgebildet, d. h. ihre Schnecken-Stege 11 greifen ineinander. Der Antrieb der Schnecken 5, 5' erfolgt von einem Elektro-Motor 12 über ein Untersetzungs- und Verzweigungs-Getriebe 13, an dem auch das Gehäuse 2 angeflanscht ist. Der Antrieb der Schnecken 5, 5' erfolgt gleichsinnig, d. h. ihre Drehrichtung 14 ist gleich.

Benachbart zum Getriebe 13, also am stromaufwärtigen Ende des Extruders 1, mündet ein Zugabe-Trichter 15 in das Gehäuse 2 ein. In Förderrichtung 8 hinter dem Trichter 15 können aus dem Gehäuse 2 ausmündende Entgasungs-Öffnungen 16, 17 vorgesehen sein, die beispielsweise an eine nicht dargestellte Vakuum-Pumpe angeschlossen sein können. Des Weiteren können Stau-Einrichtungen 18, 19 in Form entgegen der Förderrichtung 8 fördernder Schnecken-Elemente vorgesehen sein. Des Weiteren können - wie bereits erwähnt - Knetelemente vorhanden sein.

Das Gehäuse 2 ist mittels Stützen 20 auf einem Fundament 21 abgestützt.

Während die den Schnecken-Spitzen 9, 9' - bezogen auf die Förderrichtung 8 - vorgeordneten Schnecken-Elemente 6, 6' eingängig ausgebildet sind, weisen die Schnecken-Spitzen 9, 9' zwei Schnecken-Stege 22, 22a auf, sind also zweigängig ausgebildet. Der Kerndurchmesser Di der Schnecken-Elemente 6, 6' und der Schnecken-Spitzen 9, 9' ist über die ganze Länge konstant. Demgegenüber ist zwar der Außendurchmesser Da der Schnecken-Elemente 6, 6' über die Länge des Gehäuses 2 konstant. Er wird in der Praxis mit dem Durchmesser der Bohrungen 3, 3' gleichgesetzt. Bei den Schnecken-Spitzen 9, 9' verjüngen sich die Schnecken-Stege 22, 22a in Förderrichtung 8 bis auf den Kerndurchmesser Di; sie laufen also im Schnecken-Kern 23 aus. In Förderrichtung 8 vergrößert sich der letzte halbe Schnecken-Steg 22b, 22c dann wieder vom Kerndurchmesser Di bis auf den Außendurchmesser Da.

Die Bohrungen 3, 3' des Gehäuses werden durch Düsen in Form jeweils einer Düsenplatte 24, 24' abgeschlossen, die eine Vielzahl von Düsen-Löchern 25 aufweisen. Zwischen dem jeweils letzten Schnecken-Steg 22b bzw. 22c und der jeweiligen Düsenplatte 24, 24' ist ein Scher-Werkzeug 26 bzw. 26' angeordnet, das flügelartig ausgebildet ist. Die jeweils beiden Flügel bzw. Arme 27, 27a sind diametral zueinander angeordnet. Sie erstrecken sich von einer Nabe 28 im Wesentlichen radial nach außen. Der Durchmesser Dmin dieser Nabe 28 ist deutlich kleiner als der Kerndurchmesser Di des Schnecken-Kerns 23. Die Arme 27, 27a der Scher-Werkzeuge 26, 26' weisen auf ihrer in Drehrichtung 14 voreilenden Seite eine Förder-Fläche 29, 29a auf, die - bezogen auf die Drehrichtung 14 - zur jeweiligen Achse 4 bzw. 4' hin nacheilt, so dass eine Förderwirkung radial in Richtung zur Nabe 28 hin auf ein zu förderndes Material ausgeübt wird. Weiterhin sind die Förder-Flächen 29, 29a in Richtung zur Lochplatte 24 bzw. 24' hin - bezogen auf die Drehrichtung 14 - nacheilend ausgebildet, so dass das geförderte Material in einen zwischen den Armen 27, 27a und der zugewandten Seite der Düsenplatte 24 bzw. 24' ausgebildeten Scher-Spalt 30 eingeführt wird, für dessen Spaltweite s in Richtung der Achsen 4, 4' gilt: 1 mm ≤ s ≤ 3 mm.

Die Düsen-Löcher 25 sind auf den Düsenplatten 24, 24' über die gesamte Ringfläche angeordnet, die durch den Nabendurchmesser Dmin und den Außendurchmesser Da begrenzt ist. Die mit Düsen-Löchern 25 begrenzte Fläche der Düsenplatten 24, 24' erstreckt sich also über den Kerndurchmesser Di hinaus nach innen zur Achse 4 bzw. 4' hin.

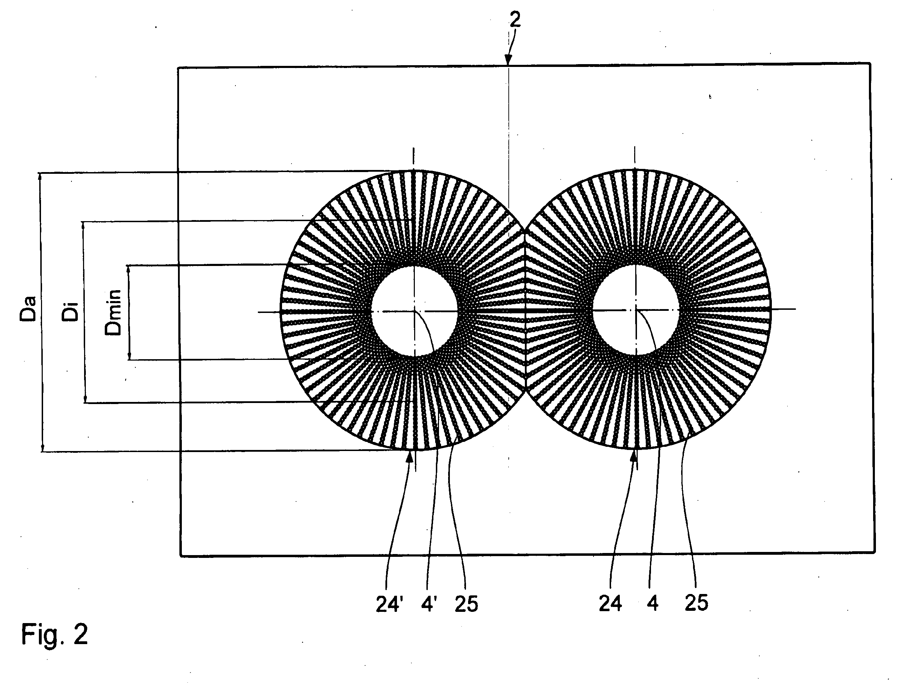

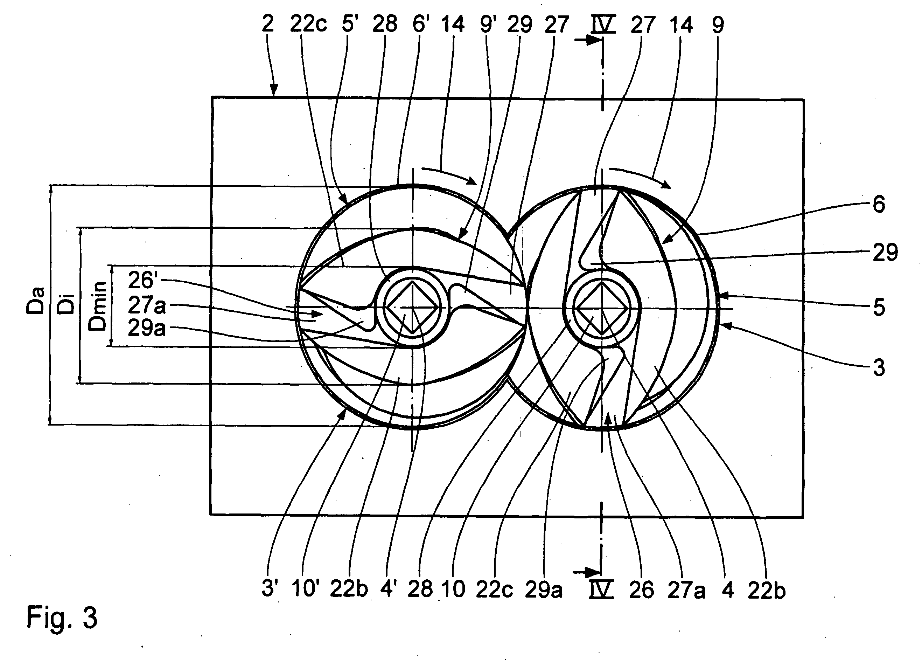

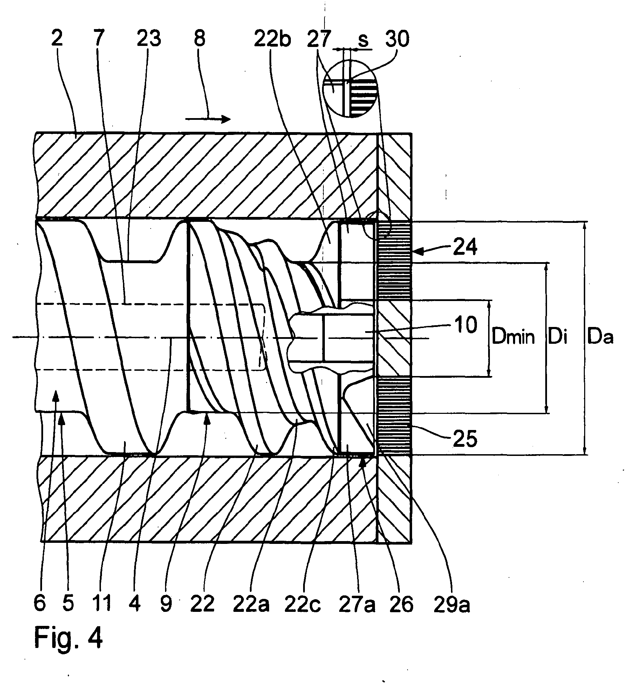

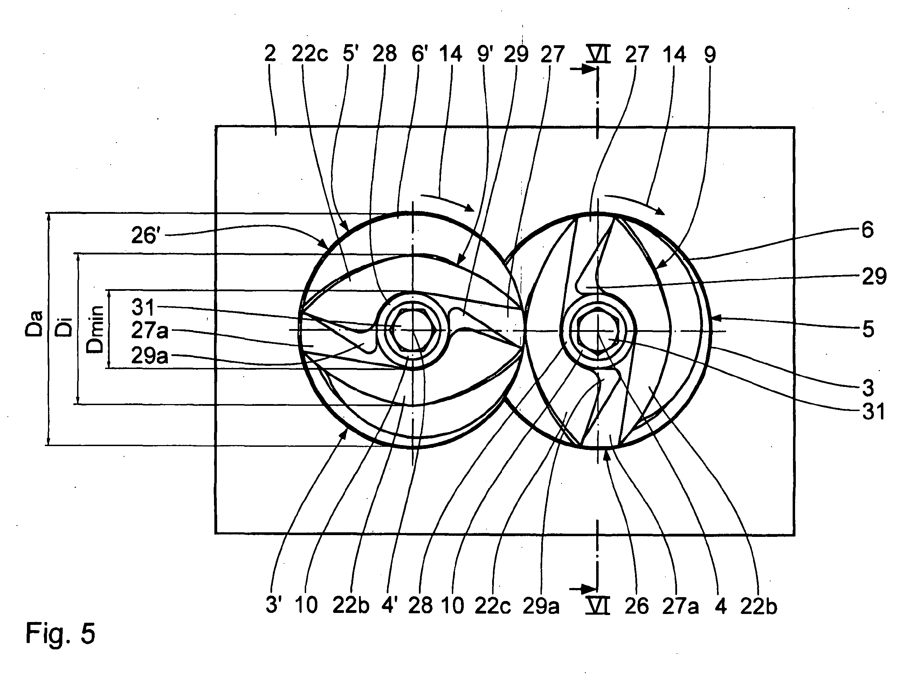

Bei der Ausgestaltung nach den Fig. 2 und 3 ist das Scher-Werkzeug 26 bzw. 26' jeweils einteilig, also einstückig, mit der benachbarten Schnecken-Spitze 9, 9' ausgebildet. Bei der Ausgestaltung nach den Fig. 4 und 5 ist das Scher-Werkzeug 26, 26' als gesondertes Bauteil ausgebildet und mittels einer Schraube 31 an der Spann-Schraube 10 befestigt.

## Patentansprüche

1. Extruder,
- mit einem Gehäuse (2),
- mit mindestens einer im Gehäuse (2) ausgebildeten Bohrung (3, 3') mit einem Durchmesser Da,
- mit einer in jeder Bohrung (3, 3') drehantreibbar angeordneten, eingängige Schneckenelemente (6, 6') mit einem Außendurchmesser Da ausweisenden Schnecke (5, 5'), die - bezogen auf eine Förderrichtung (8) - eine an einem stromabwärtigen Ende angebrachte Schnecken-Spitze (9, 9') aufweist, die wiederum einen Schnecken-Kern (23) mit einem Kern-Durchmesser Di und mindestens einen Schnecken-Steg (22b, 22c) aufweist,
- mit einer stromabwärts der Schnecken-Spitze (9, 9') und benachbart zu dieser, die mindestens eine Bohrung (3, 3') abschließenden Düsenplatte (24, 24') mit einer Vielzahl von Düsen-Löchern (25), die auf einer Ringfläche der Düsenplatte (24, 24') ausgebildet ist,
**dadurch gekennzeichnet,**
**dass** die Schnecken-Spitze (9, 9') zweigängig mit zwei Schnecken-Stegen (22, 22a) ausgebildet ist, die sich in Förderrichtung (8) bis auf den Kern-Durchmesser Di verjüngen, wobei der letzte halbe Schnecken-Steg (22b, 22c) sich jeweils in Förderrichtung (8) bis auf den Außendurchmesser Da vergrößert,
**dass** an der Schnecken-Spitze (9, 9') unmittelbar vor der Düsenplatte (24, 24') ein Scher-Werkzeug (26, 26') angebracht ist,
**dass** das Scher-Werkzeug (26, 26') zwei Arme (27, 27a) aufweist, die jeweils deckungsgleich mit dem stromabwärtigen Ende des jeweiligen Schnecken-Stegs (22b, 22c) der Schnecken-Spitze (9, 9') angeordnet und an einer Nabe (28) angebracht sind, wobei für einen Durchmesser Dmin der Nabe (28) gilt: Dmin < Di und
**dass** zwischen dem Scher-Werkzeug (26, 26') und der Düsenplatte (24, 24') ein Scher-Spalt (30) mit einer Spaltweite s ausgebildet ist, wobei für die Spaltweite s gilt: 1,0 ≤ s ≤ 3,0 mm.

2. Extruder nach Anspruch 1, **dadurch gekennzeichnet,**
**dass** jeder Arm (27, 27a) eine zur Nabe (28) hin fördernde Fläche (29, 29a) aufweist.

3. Extruder nach Anspruch 1 oder 2, **dadurch gekennzeichnet,**
**dass** jeder Arm (27, 27a) eine zum Scher-Spalt (30) hin führende Fläche (29, 29a) aufweist.

4. Extruder nach einem der Ansprüche 1 bis 3, **dadurch gekennzeichnet, dass** die Düsen-Löcher (25) auf einer Ringfläche mit dem InnenDurchmesser Dmin und einem Außendurchmesser Da angeordnet sind.

## Claims

1. Extruder comprising
- a casing (2),
- at least one bore (3, 3') which is formed in the casing (2) and has a diameter Da,
- at least one screw (5, 5') which is arranged in each bore (3, 3') in a rotatably drivable manner, which is provided with single-threaded screw elements (6, 6') with an external diameter Da, and which has a screw tip (9, 9') arranged at a downstream end - in relation to a direction of flow (8) - said screw tip (9, 9') in turn being provided with a screw stem (23) having a stem diameter Di and at least one screw flight (22b, 22c),
- a nozzle plate (24, 24') which is arranged downstream of and adjacent to the screw tip (9, 9') so as to close the at least one bore (3, 3'), which is provided with a plurality of nozzle holes (25), and which is formed on an annular surface of the nozzle plate (24, 24'),
**characterized in**
**that** the screw tip (9, 9') is double-threaded with two screw flights (22, 22a) which taper in the direction of flow (8) down to the stem diameter Di, wherein the last half screw flight (22b, 22c) increases in each case in the direction of flow (8) until the external diameter Da is reached, that a shearing tool (26, 26') is arranged at the screw tip (9, 9') directly in front of the nozzle plate (24, 24'),
**that** the shearing tool (26, 26') has two arms (27, 27a) which are in each case arranged superimposed with the downstream end of the respective screw flight (22b, 22c) of the screw tip (9, 9') and are attached to a hub (28), wherein to a diameter Dmin of the hub (28) applies: Dmin < Di, and
**that** a shearing gap (30) with a gap width s is formed between said shearing tool (26, 26') and the nozzle plate (24, 24'), wherein to the gap width s applies: 1,0 ≤ s ≤ 3,0 mm.

2. Extruder according to claim 1,
**characterized in**
**that** each arm (27, 27a) has a surface (29, 29a) conveying material towards the hub (28).

3. Extruder according to claim 1 or 2,
**characterized in**
**that** each arm (27, 27a) has a surface (29, 29a) leading towards the shearing gap (30).

4. Extruder according to any one of claims 1 to 3,
**characterized in**
**that** the nozzle holes (25) are arranged on an annular surface having the internal diameter Dmin and an external diameter Da.

## Revendications

1. Extrudeuse,
- avec un carter (2),
- avec au moins une forure (3, 3'), ayant un diamètre Da et réalisée dans le carter (2),
- avec une vis sans fin (5, 5'), qui comporte des éléments (6, 6') à filet unique et avec un diamètre extérieur Da, disposés de manière à pouvoir être entraînés en rotation dans chaque forure (3, 3'), et qui comporte une pointe de vis (9, 9'), laquelle est disposée - par référence à un sens de transport (8) - sur une extrémité arrière et laquelle comporte également un noyau de vis (23) avec un diamètre Di et au moins une crête de vis (22b, 22c),
- avec un corps de filière (24, 24') qui est disposé en aval de la pointe de vis (9, 9') et de manière adjacente à celle-ci, obture au moins une forure (3, 3') et qui est réalisée avec une pluralité de trous de filière (25), qui sont réalisés sur une surface annulaire du corps de filière (24, 24'),
**caractérisée**
**en ce que** la pointe de vis (9, 9') est réalisée à deux filets avec deux crêtes de vis (22, 22a), qui s'effilent dans le sens de transport (8) jusqu'au diamètre Di du noyau de vis, la dernière demi-crête de vis (22b, 22c) s'agrandissant respectivement dans le sens de transport (8) jusqu'au diamètre extérieur Da,
**en ce qu'**un outil de cisaillement (26, 26') est monté sur la pointe de vis (9, 9') directement devant le corps de filière (24, 24'),
**en ce que** l'outil de cisaillement (26, 26') comporte deux bras (27, 27a), qui sont disposés chacun de manière à coïncider avec l'extrémité arrière de la crête de vis (22b, 22c) respective de la pointe de vis (9, 9') et sont attachés à un moyeu (28), sachant que pour un diamètre Dmin du moyeu (28), on applique : Dmin < Di, et
**en ce qu'**une fente de cisaillement (30) avec une largeur s est réalisée entre l'outil de cisaillement (26, 26') et la plaque de buses (24, 24'), sachant que pour la largeur s de la fente, on applique : 1,0 ≤ s ≤ 3,0 mm.

2. Extrudeuse selon la revendication 1, **caractérisée en ce que** chaque bras (27, 27a) comporte une surface (29, 29a) transportant vers le moyeu (28).

3. Extrudeuse selon la revendication 1 ou 2, **caractérisée en ce que** chaque bras (27, 27a) comporte une surface (29, 29a) menant vers la fente de cisaillement (30).

4. Extrudeuse selon l'une quelconque des revendications 1 à 3, **caractérisée en ce que** les trous de filière (25) sont disposés sur une surface annulaire avec le diamètre intérieur Dmin et un diamètre extérieur Da.
